# EUROPEAN PATENT SPECIFICATION

(11) **EP 3 101 264 B1**
(45) Date of publication and mention of the grant of the patent: **15.12.2021**
(21) Application number: 16172207.9
(22) Date of filing: 31.05.2016
(51) Int. Cl.: F02M 61/10, F02M 61/16, F02M 21/02, F02M 61/18, F02B 37/18, F02B 39/16, F02M 55/00, F02M 51/06

(54) **INJECTOR WITH NEEDLE WAVERING PREVENTION STRUCTURE**
INJEKTOR MIT NADELSCHWANKUNGSVERMEIDUNGSSTRUKTUR
INJECTEUR AVEC STRUCTURE DE PRÉVENTION DE L'ONDULATION D'AIGUILLE

(30) Priority: 04.06.2015 KR 20150079261
(43) Date of publication of application: 07.12.2016
(73) Proprietor: Hyundai Kefico Corporation, Gyeonggi-do 15849 (KR)
(72) Inventor: KIM, Se Hun, 16505 Gyeonggi-do (KR); KIM, Jung Seok, 03915 Seoul (KR); PARK, Joon Hee, 22126 Incheon (KR)
(74) Representative: Zimmermann, Tankred Klaus

(56) References cited:
- EP-A1- 2 796 706
- WO-A2-93/08384
- DE-A1- 19 726 833
- DE-A1-102011 075 408
- JP-A- H08 100 733
- JP-B2- 4 160 595
- KR-A- 19990 046 719
- KR-A- 20130 044 068
- US-A1- 2003 213 858

## Description

### BACKGROUND OF THE INVENTION

### Field of the Invention

Exemplary embodiments of the present invention relate to an injector, and more particularly, to an injector with needle wavering prevention structure, which is supplied with fuel from the side of a carrier.

### Description of the Related Art

In general, vehicle injectors are devices which are each installed in an intake manifold of an engine so as to inject fuel supplied at a predetermined pressure into a combustion chamber of the engine in response to operation instructions of an ECU. Among them, LPI (LPG Injection) injectors are devices which are each applied to a fuel system of an LPG vehicle so as to inject liquid-phase fuel pressured by a fuel pump into a combustion chamber.

These injectors are disclosed in Korean Patent Laid-open Publication Nos. 10-2009-0018929 and 10-2012-0109296. US 2003/0213858 A1 discloses a dual component injector for internal combustion engines. KR 2013 0044068 A discloses a direct injection type swirl injector.

LPI injectors are classified into a top feeding type injector and a side feeding type injector according to the supply direction of fuel. The side feeding type injector is disclosed in Korean Patent Laid-open Publication No. 10-2009-0118808. In order to most closely supply fuel from an outlet due to the evaporation characteristic of LPG different from gasoline, the side feeding type injector which supplies fuel from the side is mainly used in LPI engines.

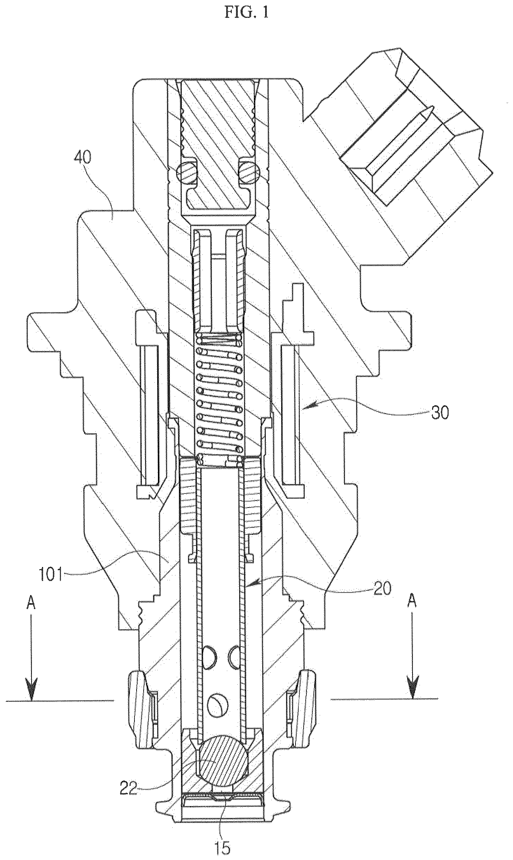

As illustrated in Fig. 1, a side feeding type LPI injector includes a nozzle assembly 101 which injects fuel in a side feeding manner, a needle assembly 20 which opens and closes a fuel inlet 15 of the nozzle assembly 101, an actuator 30 which operates the needle assembly 20, and a housing 40.

When a current flows in the coil of the actuator 30 in response to signals transmitted from an ECU in the state in which the nozzle assembly 101 is filled with fuel, the needle assembly 20 moves upward. In this case, the needle assembly 20 opens the fuel inlet 15 so that the fuel is injected into the combustion chamber of an engine.

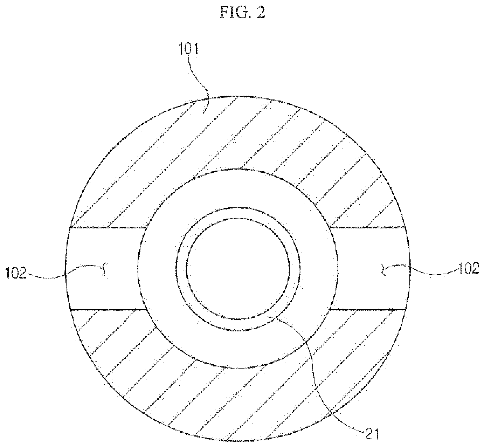

Referring to Fig. 2, conventional two fuel supply passages 102 are symmetrically formed such that the front surfaces thereof face each other, and fuel is supplied from the opposite sides of a needle 21 with a phase difference of 180 degrees. For this reason, the needle 21 wavers due to the imbalance of moments occurring therein, thereby causing the opening and closing area of the fuel inlet 15 to be uneven. As a result, fuel may be unstably injected.

In addition, since a valve body 22 provided at the lower end of the needle 21 and the valve seat surface of the fuel inlet 15 are worn due to the vibration of the needle 21, fuel may leak.

### SUMMARY OF THE INVENTION

It is an object of the present invention to provide an injector with needle wavering prevention structure, capable of preventing fuel from leaking and improving durability of components by reducing the wavering of a needle, and of increasing combustion efficiency through swirl.

This object is achieved by an injector according to claim 1.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

The fuel supply passage may consist of four fuel supply passages formed at intervals of 90 degrees.

It is to be understood that both the foregoing general description and the following detailed description of the present invention are exemplary and explanatory and are intended to provide further explanation of the invention as claimed.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a side cross-sectional view illustrating an LPI injector according to the related art;
Fig. 2 is a cross-sectional view taken along line A-A of Fig. 1;
Fig. 3 is a side view illustrating an injector with needle wavering prevention structure according to an example;
Fig. 4 is a cross-sectional view taken along line B-B of Fig. 3;
Fig. 5 is a side view of a carrier illustrated in Fig. 3;
Fig. 6 is a side cross-sectional view taken along line C-C of Fig. 5;
Fig. 7 is a cross-sectional view taken along line D-D of Fig. 5; and
Figs. 8 and 9 are cross-sectional views illustrating a carrier according to embodiments of the present invention.

### DESCRIPTION OF SPECIFIC EMBODIMENTS

Exemplary embodiments of the present invention will be described below in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Throughout the disclosure, like reference numerals refer to like parts throughout the various figures and embodiments of the present invention.

### Example

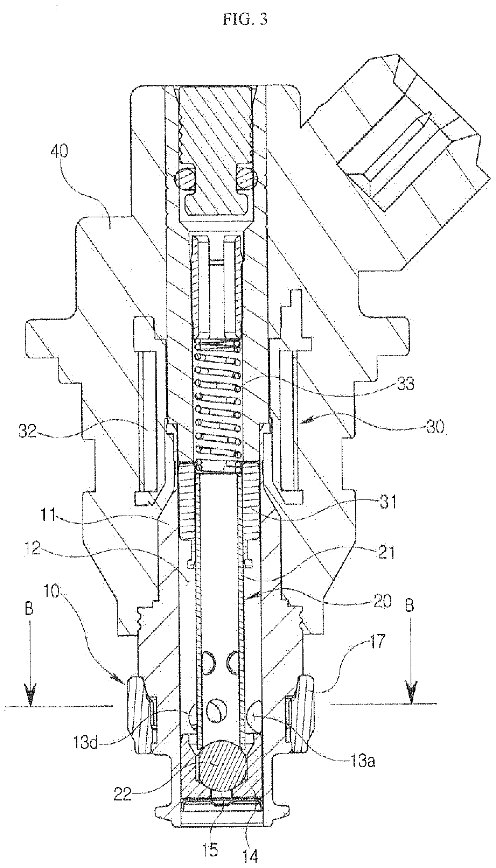

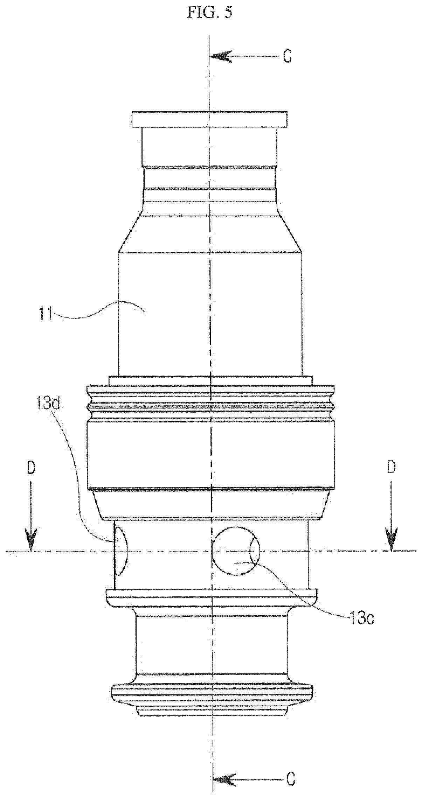

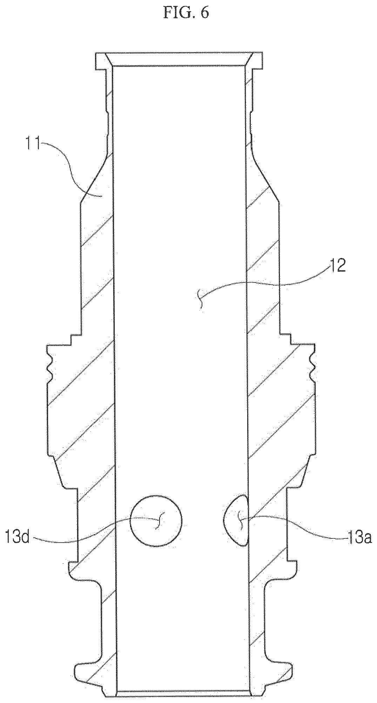

Referring to Figs. 3 to 7, an injector with needle wavering prevention structure includes a nozzle assembly 10 which injects fuel in a side feeding manner, a needle assembly 20 which opens and closes an fuel inlet 15 of the nozzle assembly 10, an actuator 30 which operates the needle assembly 20, and a housing 40.

The needle assembly 20 includes a needle 21 and a valve body 22. The actuator 30 includes an armature 31, a solenoid part 32, and a return spring 33.

A magnetic force is generated when power is supplied to the solenoid part 32 of the actuator 30, and the valve body 22 opens the fuel inlet 15 while the armature 31 and the needle 21 move upward by the magnetic force of the solenoid part 32, so that fuel is injected into a combustion chamber of the an engine.

The nozzle assembly 10 includes a carrier 11 and a nozzle body 14. The carrier 11 has a fuel injection chamber 12 which is formed therein and has a tubular shape, and the nozzle body 14 is coupled to the lower end of the carrier 11.

The fuel inlet 15, through which fuel is injected into the combustion chamber of the engine, is formed at the nozzle body 14. The carrier 11 has fuel supply passages 13a, 13b, 13c, and 13d formed on the inner wall of the fuel injection chamber 12.

A filter 17 having a ring shape is fitted outside the carrier 11 so as to filter fuel supplied to the fuel supply passages 13a, 13b, 13c, and 13d from the outside. A casing (not shown), which forms a passage for supplying fuel to the fuel supply passages 13a, 13b, 13c, and 13d from the outside, is coupled outside the carrier 11.

Fuel is injected through the fuel supply passages 13a, 13b, 13c, and 13d into the fuel injection chamber 12 in a direction transverse the injection direction of the fuel inlet 15.

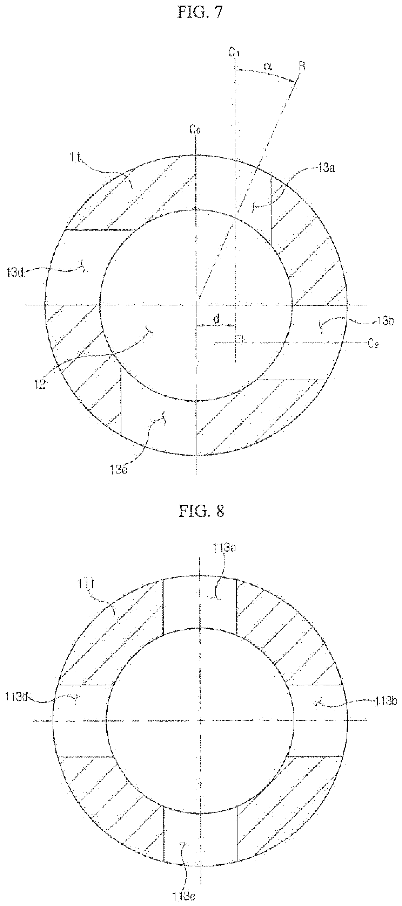

The four fuel supply passages 13a, 13b, 13c, and 13d are formed circumferentially at equal intervals of 90 degrees in the carrier 11. Referring to Fig. 7, the fuel supply passage 13a is formed such that the center line C₁ thereof forms an acute angle α with the radial direction R of the fuel injection chamber 12. For example, the center line C₁ of the fuel supply passage 13a is spaced apart from the center line C₀ of the fuel injection chamber 12 by a predetermined distance d. The fuel supply passage 13a is formed opposite to the fuel supply passage 13c such that they are symmetric about the center line C₀ of the fuel injection chamber 12. That is, the two facing fuel supply passages 13a and 13c or 13b and 13d are offset about the center of the needle 21. As a result, the two facing fuel supply passages 13a and 13c or 13b and 13d are formed on different parallel lines so as to be in parallel with each other. The two adjacent fuel supply passages 13a and 13b or 13c and 13d are at right angles to each other. For example, the center line C₁ of the fuel supply passage 13a forms a right angle with the center line C₂ of the fuel supply passage 13b.

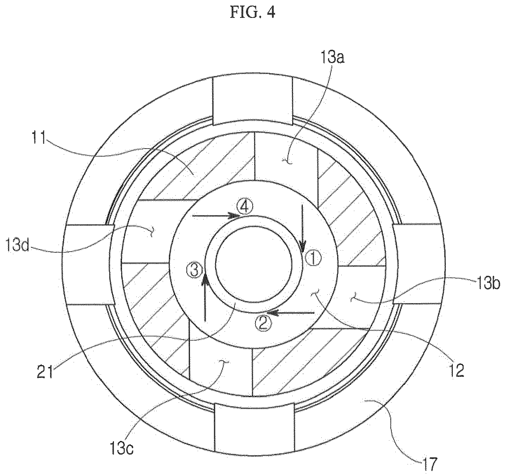

Accordingly, as illustrated in Fig. 4, fuel is injected to the outer peripheral surface of the needle 21 in opposite directions through the two facing fuel supply passages 13a and 13c or 13b and 13d. That is, fuel is injected to the outer peripheral surface of the needle 21 in the directions of arrows ① and ③ through the two fuel supply passages 13a and 13c, and fuel is injected to the outer peripheral surface of the needle 21 in the directions of arrows ② and ④ through the other two fuel supply passages 13b and 13d. This maximizes the generation of swirl along the outer peripheral surface of the needle 21. When the swirl is increased, the burning velocity and flame speed of fuel are increased so that combustion efficiency is improved.

In addition, fuel injection pressures, which are applied to the outer peripheral surface of the needle 21 in four directions, are balanced so that the centering of the needle is maintained without the wavering of the needle 21. Consequently, it is possible to prevent the fore ends of the fuel inlet 15 and the needle 21 from being worn, and to thereby prevent the leak of fuel.

### First Embodiment

Referring to Fig. 8, fuel supply passages 113a, 113b, 113c, and 113d are formed in the radial direction of a carrier 11. Although the four fuel supply passages 113a, 113b, 113c, and 113d illustrated in Fig. 8 are formed circumferentially at equal intervals of 90 degrees, similarly to those of the example illustrated in Fig. 7, the four fuel supply passages 113a, 113b, 113c, and 113d are formed such that the front surfaces thereof face each other on the same parallel line. This structure is also effective in preventing the wavering of a needle 21 since fuel is diffused and injected in four directions so that moments acting on the needle 21 are uniformly distributed. However, since fuel is vertically injected to the outer peripheral surface of the needle 21 in the present embodiment, the generation of swirl is slightly reduced unlike the example.

### Second Embodiment

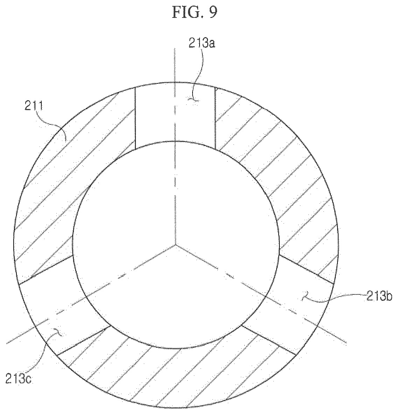

Referring to Fig. 9, three fuel supply passages 213a, 213b, and 213c are formed at equal intervals of 120 degrees. Since the pressures of fuel injected into a needle through the three fuel supply passages 213a, 213b, and 213c are balanced, it is possible to prevent the wavering of the needle.

As such, when the at least three fuel supply passages 213a, 213b, and 213c are radially formed at equal intervals, the needle may be centered. Therefore, five fuel supply passages may form a regular pentagonal shape or six fuel supply passages may form a regular hexagonal shape. Accordingly, the case where a plurality of fuel supply passages forms an equiangular shape is included in the scope of the present invention.

As is apparent from the above description, an injector with needle wavering prevention structure of the present invention can balance fuel injection pressures applied to a needle so that the needle is centered without wavering. Accordingly, it is possible to prevent fuel from leaking and improve durability of components by reducing the abrasion of the needle and a fuel inlet, and to improve combustion efficiency by maximizing the generation of swirl.

While the present invention has been described with respect to the specific embodiments, it will be apparent to those skilled in the art that various changes and modifications may be made without departing from the scope of the invention as defined in the following claims.

In addition, it is to be understood that differences relevant to the variations and modifications fall within the scope of the present invention defined in the appended claims.

## Claims

1. An injector with needle wavering prevention structure, which is a side feeding type injector including a fuel injection chamber (12) in which fuel is injected into a combustion chamber of an engine through a fuel inlet (15), and a fuel supply passage through which fuel is injected into the fuel injection chamber (12) in a direction transverse an injection direction of the fuel inlet (12),
wherein the injector including a nozzle assembly (10) which includes a carrier (11) and a nozzle body (14), a needle assembly (20) which opens and closes the fuel inlet (15), an actuator (30) which operates the needle assembly (20),
wherein the carrier (11) has the fuel injection chamber (12) which is formed therein and has a tubular shape, and the nozzle body (14) is coupled to the lower end of the carrier (11),
wherein the needle assembly 20 includes a needle 21,
**characterized in that** the fuel supply passage consists of at least three fuel supply passages formed at equal intervals in a circumferential direction of the carrier (11), and the fuel supply passages are formed in a radial direction of the fuel injection chamber (12) and formed in the carrier (11) , and the fuel supply passages inject fuel to the outer peripheral surface of the needle 21 to maintain the centering of the needle 21.

2. The injector according to claim 1, wherein the fuel supply passage (113a, 113b, 113c, 113d) consists of four fuel supply passages formed at intervals of 90 degrees and formed in the carrier (11).

## Patentansprüche

1. Ein Einspritzer mit einer Struktur zum Verhindern von Nadelschwankung, welcher ein Einspritzer vom Seitenzufuhrtyp ist, einschließlich einer Kraftstoffeinspritzkammer (12), in der Kraftstoff in eine Verbrennungskammer eines Verbrennungsmotors durch einen Kraftstoffeinlass (15) eingespritzt wird, und eine Kraftstoffzufuhrpassage, durch die Kraftstoff in die Kraftstoffeinspritzkammer (12) in einer Richtung quer zu einer Einspritzrichtung des Kraftstoffeinlasses (12) eingespritzt wird,
wobei der Einspritzer eine Düsenanordnung (10), die einen Träger (11) und einen Düsenkörper (14) umfasst, eine Nadelanordnung (20), die den Kraftstoffeinlass (15) öffnet und schließt, einen Aktor (30), der die Nadelanordnung (20) betätigt, umfasst,
wobei der Träger (11) die Kraftstoffeinspritzkammer (12) aufweist, die darin gebildet ist und eine Röhrenform aufweist, und der Düsenkörper (14) mit dem unteren Ende des Trägers (11) gekoppelt ist,
wobei die Nadelanordnung (20) eine Nadel (21) umfasst,
**dadurch gekennzeichnet, dass** die Kraftstoffzufuhrpassage aus zumindest drei Kraftstoffzufuhrpassagen besteht, die an unterschiedlichen Abständen in einer Umfangsrichtung des Trägers (11) gebildet sind, und die Kraftstoffzufuhrpassagen in einer Radialrichtung der Kraftstoffzufuhrkammer (12) gebildet sind und in dem Träger (11) gebildet sind, und die Kraftstoffzufuhrpassagen Kraftstoff an die äußere periphere Oberfläche der Nadel (21) spritzen, um die Zentrierung der Nadel (21) aufrechtzuerhalten.

2. Der Einspritzer gemäß Anspruch 1, bei dem die Kraftstoffzufuhrpassage (113a, 113b, 113c, 113d) aus vier Kraftstoffzufuhrpassagen besteht, die an Abständen von 90 Grad gebildet sind und in dem Träger (11) gebildet sind.

## Revendications

1. Injecteur à structure de prévention d'ondulation d'aiguille, qui est un injecteur du type à alimentation latérale comportant une chambre d'injection de carburant (12) dans laquelle le carburant est injecté dans une chambre de combustion d'un moteur à travers une entrée de carburant (15), et un passage d'alimentation de carburant à travers lequel le carburant est injecté dans la chambre d'injection de carburant (12) dans une direction transversale à une direction d'injection de l'entrée de carburant (12),
dans lequel l'injecteur comporte un ensemble de buse (10) qui comporte un support (11) et un corps de buse (14), un ensemble d'aiguille (20) qui ouvre et ferme l'entrée de carburant (15), un actionneur (30) qui actionne l'ensemble d'aiguille (20),
dans lequel le support (11) présente la chambre d'injection de carburant (12) qui y est formée et présente une forme tubulaire, et le corps de buse (14) est couplé à l'extrémité inférieure du support (11),
dans lequel l'ensemble d'aiguille 20 comporte une aiguille 21,
**caractérisé par le fait que** le passage d'alimentation de carburant est constitué d'au moins trois passages d'alimentation de carburant formés à intervalles égaux dans une direction circonférentielle du support (11), et les passages d'alimentation de carburant sont formés dans une direction radiale de la chambre d'injection de carburant (12) et formés dans le support (11), et les passages d'alimentation de carburant injectent le carburant sur la surface périphérique extérieure de l'aiguille 21 pour maintenir le centrage de l'aiguille 21.

2. Injecteur selon la revendication 1, dans lequel le passage d'alimentation de carburant (113a, 113b, 113c, 113d) est constitué de quatre passages d'alimentation de carburant formés à des intervalles de 90 degrés et formés dans le support (11).
